(19) Europäisches Patentamt
European Patent Office
Office européen des brevets

(11) Publication number: 0 250 767 B1

(12) **EUROPEAN PATENT SPECIFICATION**

(45) Date of publication of patent specification: **04.09.91 Bulletin 91/36**

(51) Int. Cl.$^5$: **C08F 14/18**

(21) Application number: **87106253.5**

(22) Date of filing: **29.04.87**

(54) **Process for the polymerization of fluorinated monomers in aqueous dispersion.**

The file contains technical information submitted after the application was filed and not included in this specification

(30) Priority: **26.06.86 IT 2090986**

(43) Date of publication of application: **07.01.88 Bulletin 88/01**

(45) Publication of the grant of the patent: **04.09.91 Bulletin 91/36**

(84) Designated Contracting States: **AT BE CH DE ES FR GB IT LI NL SE**

(56) References cited:
**EP-A- 0 006 346**
**EP-A- 0 106 956**
**EP-A- 0 130 052**
**EP-A- 0 149 000**
**EP-A- 0 247 379**

(56) References cited:
**WO-A-83/02620**
**CHEMICAL PATENTS INDEX BASIC ABSTRACTS JOURNAL, SECTION A, PLASDOC, AN = 85084003, Derwent Publications Ltd, London, GB**

(73) Proprietor: **AUSIMONT S.p.A.**
**31, Foro Buonaparte**
**I-20121 Milano (IT)**

(72) Inventor: **Giannetti, Enzo**
**70, Corso Vercelli**
**I-28100 Novara (IT)**
Inventor: **Visca, Mario**
**52, Spalto Marengo**
**I-15100 Alessandria (IT)**

(74) Representative: **Barz, Peter, Dr. et al**
**Patentanwälte Dipl.-Ing. G. Dannenberg Dr. P Weinhold, Dr. D. Gudel Dipl.-Ing. S. Schubert Dr. P. Barz Siegfriedstrasse 8**
**W-8000 München 40 (DE)**

EP 0 250 767 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for polymerizing or copolymerizing fluorinated monomers in an aqueous dispersion, in the presence of radical starters, characterized in particular by a much higher polymerization rate than the one attainable with the known processes under analogous operative conditions.

As is well known, the fluoroolefins exhibit different reactivities in the polymerization process, some of them having very low or no reactivities in comparison with tetrafluoroethylene (TFE). In this connection, $C_3F_6$ may be cited as an example.

Also, some perfluorovinylethers exhibit a very low reactivity in polymerization with respect to the other fluoroolefins, in particular with respect to TFE (see US-A-3 132 123).

The consequence of this behaviour is that the preparation of copolymers from comonomers having very different reactivities from one another makes it necessary to operate with a high concentration of the less reactive monomers and therefore to operate at a very high partial pressure of said comonomer.

For example, in order to prepare FEP (thermoplastic copolymer $C_2F_4$-$C_3F_6$) with a content of 5-25% by weight of $C_3F_6$, it is necessary to operate with a high concentration of $C_3F_6$ in the gas phase, corresponding to a total pressure of the monomers in the range of from 3.4 to 3.9 MPa abs. (35 to 40 kg/cm$^2$ abs.) (see US-A-3 132 124).

Thus, the necessity was felt to increase the polymerization rate for the monomers with low reactivity in order to avoid operating at very high pressures and, at the same time, to reduce the polymerization times.

EP-A-247 379 discloses a process for polymerizing or copolymerizing fluorinated monomers in an aqueous dispersion by using radical starters and fluorinated surfactants, in the presence of a perfluoropolyether having neutral end groups which is liquid under the poolymerization conditions and is in the form of an aqueous emulsion. This process exhibits a very large number of advantages in comparison with the usual polymerization in the absence of perfluoropolyether, while it raises some problems as regards the reproducability of the emulsion when it is carried out with autoclaves of large volume. Furthermore, the process requires the use of considerable amounts of perfluoropolyether in order to obtain significant effects on the polymerization rate, which, as is well-known, leads to a considerable increase in costs. Moreover, the emulsion must be prepared immediately before use and cannot be stored, due to the limited shelf life of the perfluoropolyether emulsions.

It has now, surprinsingly, been found that it is possible to overcome these problems by preparing the perfluoropolyether in the form of an aqueous microemulsion.

The term "microemulsion" is used to designate a system in which the perfluoropolyether having neutral end groups is solubilized by a surfactant solution to provide a monophase solution which is stable for a long time without needing dispersion energy.

In fact, the microemulsion may be prepared by simple mixing of the components water, perfluoropolyether having neutral (inert) end groups and a fluorinated surfactant, in particular, of the type of perfluoropolyether having carboxylic end groups or cationic end groups. The detailed description of the microemulsion utilized in the present invention is given in EP-A-250 766. According to said EP-A microemulsions are limpid or slightly opalescent liquid substances in which a liquid immiscible with the liquid forming the continuous phase is present in the form of microdispersed droplets having dimensions not exceeding 200 nm or is solubilized in the surfactant mixtures. Microemulsions form by simply mixing the components at a temperature at which the microemulsion is stable without having to supply a considerable dispersion energy as in the case of conventional emulsions where the use of high dispersion energies (e.g. provided by Ultraturrax®, ultrasound and fast dispersion means) is always required. Moreover, in contrast to conventional emulsions which are kinetically stable systems of the irreversible type (i.e., they cannot be restored by simple mixing once a phase separation has occured), microemulsions are thermo-dynamically stable systems within a certain temperature range, i.e., they tend to undergo phase separation outside said temperature range but form again spontaneously by simple mixing once they are inside said temperature range.

The microemulsion preparation is reproducible, is not influenced by volume effects and provides a system in which the interphase area is very large. This allows to transfer polymerization recipes from a laboratory scale to a commercial scale without problems, and to sensibly reduce - the polymerization kinetics being the same - the perfluoropolyether amount which is present in the polymerization medium.

It is of importance that the perfluoropolyether is in the form of a microemulsion at the moment of its addition to the polymerization medium while it does not necessarily have to be in this form once it is diluted with the solution in the autoclave.

Any perfluoropolyether composed of sequences of perfluorooxyalkylene units can advantageously be utilized.

The mean molecular weights of the perfluoropolyethers can vary over a wide range starting from a value of about 500.

In the process of the invention, however, it is preferable to use perfluoropolyethers with a molecular weight ranging from 600 to 3000.

Suitable perfluoropolyethers are, for example, the ones of the following classes:

1) 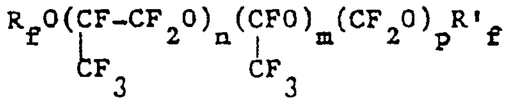

with a random distribution of the perfluoro-oxyalkylene units, where $R_f$ and $R'_f$, the same or different from each other, are $-CF_3$, $-C_2F_5$ or $-C_3F_7$;

2) $R_fO(CF_2CF_2O)_n(CF_2O)_mR'_f$

with a random distribution of the perfluoro-oxyalkylene units, where $R_f$ and $R'_f$, the same or different from each other, are $-CF_3$ or $-C_2F_5$;

3) 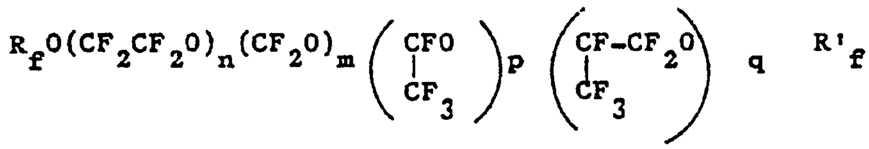

with a random distribution of the perfluoro-oxyalkylene units, where $R_f$ and $R'_f$, the same or different from each other, are $-CF_3$, $-C_2F_5$ or $-C_3F_7$;

4) 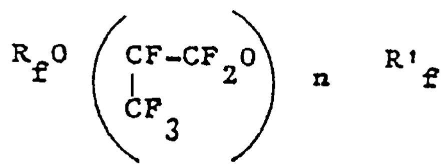

where $R_f$ and $R'_f$, the same or different from each other, are $-C_2F_5$ or $-C_3F_7$;

5) $R_fO(CF_2CF_2O)_nR'_f$

where $R_f$ and $R'_f$, the same or different from each other, are $-CF_3$ or $-C_2F_5$;

6) $R_fO(CF_2CF_2CF_2O)_nR'_f$

where $R_f$ and $R'_f$, the same or different from each other, are $-CF_3$ $-C_2F_5$ or $C_3F_7$;

7) 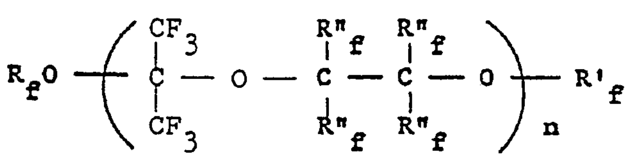 and

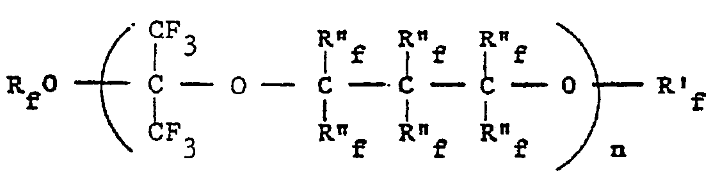

wherein $R_f$ and $R'_f$ are perfluoroalkyl and $R''_f$ is F or perfluoroalkyl; m, n, p and q in the above formulae having values such that the corresponding perfluoropolyethers meet the above requirements with respect to average molecular weight and liquid state.

Perfluoropolyethers of class 1) are commercially known under the trademark Fomblin ® Y or Galden ® ; the ones of class 2), under the trademark Fomblin ® Z, all of them being manufactured by Montedison.

Commercially known products of class 4) are Krytox ® (Du Pont). The products of class 5) are described in 4 523 039 or in J. Am. Chem. Soc. 1985, 107, 1197-1201. The products of class 6) are described in EP-A-148 482 in the name of Daikin.

The products of class 3) are prepared according to US-A-3 665 041.

The products of class 7) are described in PCT application WO 87/00538.

The amount of perfluoropolyether to be used in the process of the invention is very low. The amount is of the order of 0.05-2 ml per liter of aqueous polymerization solution. The preferred amounts are 0.4 - 1.5 ml per liter.

As radical starter it is possible to use any type which is well known for the polymerization of fluorinated monomers in aqueous dispersion.

Peroxidized compounds in general, either inorganic or organic, are suitable; among the former, potassium or ammonium persulphates are particularly suitable. As organic peroxides, there are suitable both those which are water-soluble, such as disuccinyl peroxide, and those which are water-insoluble (see for example EP-A-75,312). It is also possible to use the known radical starters of the azo-type, such as, e.g., the ones described in US-A-2 515 628 and 2 520 338. When it is desirable to operate at low polymerization temperatures (for example from 10 to 50°C), a redox starter can be used.

The radical starter amount is the one which is usually employed in the polymerization of fluoro-olefins: it ranges from 0.003 to 2% by weight referred to the total amount of polymerized monomers.

The radical starter or -depending on the specific case- the redox system components, can be introduced into the reactor at the beginning of the polymerization, or can be gradually added in the course of polymerization.

The surfactant required to stabilize the latex particles is contained in part or in whole in the neutral perfluoropolyether microemulsion. Generally, the surfactant contained in the microemulsion is sufficient for the polymerization process.

Suitable surfactants are the known ones, which consist of perfluorinated compounds, in particular those having: 6 to 11 carbon atoms, of the class of carboxylic and sulphonic acids.

Further suitable surfactants are those of the class of the perfluoropolyethers having one or two acid end groups.

The latter class of surfactants is preferred, as it offers the advantage of a better solubilizing effect towards the perfluoropolyethers having neutral end groups.

The perfluoropolyether microemulsion must be introduced into the aqueous at the beginning of the polymerization: no assumption is made with respect to the perfluoropolyether dispersion degree after the microemulsion has been diluted in the polymerization medium: it could be still in the form of a microemulsion, or in a less finely particled state. Probably, however, the perfluoropolyether dispersion degree is significantly higher than the one attainable by the process according to EP-A- 247 379. Subsequently, the other ingredients (monomers, starters, molecular weight regulators, if any) are introduced.

The process for the polymerization in aqueous dispersion according to the present invention can advantageously be utilized also in the preparation of copolymers of $C_2F_4$ of the following classes:

- polytetrafluoroethylene of "modified" type, i.e. containing small amounts, lower than 0.5% by weight, of one or more comonomers such as, for example, perfluoropropene, perfluoroalkylperfluorovinylethers, vinylidene fluoride, hexafluoroisobutene, chlorotrifluoroethylene;
- thermoplastic copolymers of $C_2F_4$, e.g., copolymers containing from 7 to 27% by weight of $C_3F_6$ (type FEP produced by Du Pont), copolymers containing from 0.5 to 10%, in particular from 2 to 4% by weight, of perfluoroalkylperfluorovinylethers (type PFA) and copolymers containing a large amount of $C_2H_4$ plus a small amount of a third comonomer of the fluorinated type (such as Tefzel ® produced by Du Pont).
- elastomeric copolymers containing from 20% to 50% by mols of perfluoroalkylperfluorovinylether (or of perfluoro-oxyalkylperfluorovinyl ether) and a cure site monomer (for example Kalrez ® produced by Du Pont);
- elastomeric terpolymers of $CF_2 = CH_2/C_2F_4/C_3F_6$ and $CF_2 = CH_2/C_2F_4$/PFVE.

A further case in which the polymerization process of the invention can usefully be employed is the thermoplastic copolymer ClFC = $CF_2$/ethylene (type Halar®).

The process according to the invention offers, besides the advantages described hereinbefore, also the same advantages (possibility to operate at lower polymerization pressures than the ones of the prior art) which are illustrated in EP-A- 247 379 relating to the copolymerization of fluorinated monomers. A particular feature of the process of the present invention is the obtainment of aqueous fluoropolymer dispersions characterized by an extremely high number of particles per liter and by an extremely small diameter of the particles. Typical examples of numbers of polymer particles per liter are of the order of 0.5 - $5.10^{18}$.

A further characteristic of the process of the present invention is that -with the same polymerization kinetics- the utilized perfluoropolyether amount is lower by about one order of magnitude than the one indicated in the

examples of EP-A- 247 379 and this leads to the above mentioned advantages.

The examples given hereinafter are merely illustrative of a few practical embodiments of the process according to the invention.

The following methods of analysis and characterization have been utilized to determine the properties of the polymeric materials obtained in the examples.

a) The determination of the melting start temperature, of the melting peak temperature and of the melting end temperature was carried out by differential calorimetry, using a Perkin-Elmer calorimeter, type DSC IV. About 10 mg of copolymer were heated from room temperature up to 350°C at a heating rate of 10°C/minute.

The polymer was cooled to room temperature at a rate of 10°C/minute and heated again to 350°C at the same heating rate. The temperature corresponding to the maximum of the melt endotherm is hereinafter indicated as second melt peak.

b) The HPF content in the $C_2F_4/C_3F_6$ copolymer was determined by FTIR spectroscopy using a Nicolet spectroscope mod. 20SXB on a thin film (0.05 mm ± 0.01 mm) formed by extrusion at 340°C. The ratio between the absorbance of the band characteristics of HFP at 983 $cm^{-1}$ and the absorbance of the reference band at 2353 $cm^{-1}$ is hereinafter indicated as specific absorbance ratio. The weight percent content of HFP was calculated through proper calibration obtained from differential mass balance, by multiplying the specific adsorbance ratio by 4.5.

c) For determining the viscosity of the melt or the melt flow index (MFI) use was made of the apparatus described in standard ASTM D-1238-65T, with the exception that the cylinder, the piston and the outlet nozzle were manufactured from corrosion-proof material. The outlet nozzle had a length of 8 mm and its inner diameter was 2.0955 mm. The diameter of the cylinder was 0.95 cm. A certain amount of polymer was molten in the cylinder and was maintained at 372°C for about ten minutes. The molten polymer was then extruded through a nozzle, maintaining a constant extrusion pressure of 5 kg on the piston. The MFI value was calculated on the basis of the grams of polymer extruded through the nozzle in 10 minutes. To obtain the apparent melt viscosity expressed in units of 100 mPa·s it is sufficient to divide 53,500 by the MFI value.

d) The volability index (V.I.) was determined by weighing 10 g of resin on an aluminium sheet, which was placed into a glass vial connected with a vacuum system. Vacuum (0.26 kPa (2 mm Hg)) was generated in the vial and once the equilibrium had been reached the vial was heated to 380°C. The pressure in the vial was recorded with respect to the time. The volability index was calculated by the following formula:

$$V.I. \quad \frac{(P_{40} - P_o)\ V}{10}$$

where $P_o$ and $P_{40}$ are the pressure, expressed in mm of Hg, (1 mm Hg ≙ 133.3 Pa) in the vial at time 0 and after 40 minutes, respectively, and V is the vial volume (1 21 ± 0.2 ml).

e) The mean diameter of the particles was measured by means of a Coulter nano sizer by laser light diffusion. A latex sample was diluted from 1 to 100 and filtered over a Millipore 1.0 µm filter. Six measurements were then carried out, the maximum value and the minimum value were disregarded and the arithmetical mean value thus found was assumed to represent the mean diameter of the particles. The data were in good agreement with the ones found by transmission electron microscopy, which is another method utilizable to determine the mean diameter of the particles.

f) The polymer resin was extruded in a Brabender extruder, type Plasticord PL 651, to cylindrical pellets having a diameter of about 3.5 mm and a thickness from 1.5 to 3 mm. The color of the granules was determined by projecting white through the sample, causing the reflected light to pass through a set of filters and measuring, at last, the intensity of the light. A high percentage of reflected green light indicates a high whiteness. Utilized was a Gardner colorimeter, type XL 10A.

EXAMPLE 1

Into a glass vessel there were introduced 5 parts of an acid having the structure of a perfluoropolyether belonging to class 1, wherein $R'_f$ = $-CF_2COOH$ or -COOH, having a acidimetric molecular weight of 632, 3 parts of a perfluoropolyether of class 1 with perfluoroalkyl and groups and PM 800, 5 parts of an aqueous solution of 10% $NH_4OH$ and 10 parts of water.

The resulting dispersion was heated to 75°C under slight stirring. A perfectly limpid solution was obtained. Upon cooling to room temperature, the solution separated into two phases, but the system proved to be reversible on heating. The system was identified as a microemulsion stable in the range of 60 - 90°C. 15.3 ml of the microemulsion at 75°C, which obtained 2 ml of the above neutral perfluoropolyether, were added to 2 l of carefully deaerated water in a 4.2 l autoclave made of steel AISI 316, equipped with a mechanical stirrer, in which vacuum had previously been generated.

The temperature in the autoclave was brought to 95°C under mechanical stirring (600 rpm). The pressure was brought to 1.9 MPa (20 kg/cm²) gange, using a gaseous mixture containing 63% By moles of $C_3F_6$ and 37% of $C_2F_4$. 62 ml of an aqueous solution prepared by dissolving 0.73 g of $(NH_4)_2S_2O_8$ and 0.73 g of $K_2S_2O_8$ in 500 ml of $H_2O$ were then introduced into the autoclave. As soon as the pressure in the autoclave began to decrease, it was restored by feeding, by means of a compressor, a $C_3F_6/C_2F_4$ mixture containing 5.8% by moles of hexafluoropropene. After 15 minutes, the above persulphate solution was fed at a flowrate of 88 ml/h. Stirring in the reactor was continued for 60 minutes, whereafter the reaction was stopped and the gas mixture was discharged. An aqueous dispersion containing 224 g/l of a polymeric resin was obtained.

The mean diameter of the dispersion particles, determined through electron microscopy, was 0.041 µm. The number of particles per liter of water ($N_{p/1}$) was equal to $2.9 . 10^{18}$.

The aqueous dispersion was coagulated by mechanical stirring, was filtered and the solid product was repeatedly washed with distilled water and dried in a fan cooled oven at 200°C. The product had a M.F.I. (melt flow index) of 0.65 g/10 minutes and a second melt peak at 262.4°C. The resulting powder was extruded in a Brabender single-screw extruder. Regular and perfectly white pellets were obtained. The product did not need any further stabilization and whitening treatment. The thermovolatility index was 59 and the whiteness was 71.

EXAMPLE 2

It was operated as in example 1, using 11 ml of the microemulsion according to example 1, containing 1.43 ml of neutral perfluoropolyether.

The reaction was stopped after 65 minutes and the latex was discharged. An aqueous dispersion containing 225 g/l of a polymeric resin was obtained. The average diameter of the particles was determined by electron microscopy and was 0.046 µm, corresponding to a number of particles per litre of water of $2.2 . 10^{18}$.

The coagulated powder exhibited a melt flow index of 0.92 and a specific absorbance ratio of 3.5.

EXAMPLE 3 (comparison test)

8 ml of the perfluoropolyether of example 1 with perfluoroalkyl end groups were added to 250 ml of distilled water.

The suspension was stirred for 5 minutes by means of an Ultraturrax ® stirrer mod. T65 (10,000 rpm) manufactured by IKA Werke. There was added an aqueous solution containing 4 g of

$$CF_3O-(\underset{\substack{|\\ CF_3}}{CF}-CF_2-O)_n-COONH_4$$

having an equivalent acidimetric molecular weight of 690. The emulsion so obtained was homogenized for a further 5 minutes. The dispersion was fed into a steel AISI 316 autoclave of 4.2 liter volume, wherein vacuum had previously been generated. Distilled water was added up to a total volume of 2,000 ml. The temperature in the autoclave was brought to 95°C; the pressure was brought to 1.9 MPa (20 kg/cm²) gauge using a gaseous mixture containing 62% by moles of $C_3F_6$ and 38% by moles of $C_2F_4$. 62 ml of an aqueous solution obtained by dissolving 0.73 g of $(NH_4)_2S_2O_8$ and 0.73 g of $H_2S_2O_8$ in 500 ml of $H_2O$ were then introduced into the autoclave. As soon as the pressure in the autoclave began to decrease, it was brought to the initial value by feeding, through a compressor, a $C_3F_6/C_2F_4$ mixture containing 6.7% by moles of hexafluoropropene. After 15 minutes, the above-mentioned persulphate solution was fed at a rate of 88 ml/h. Stirring in the reactor was conducted for 65 minutes, whereafter it was stopped and the reactor content was discharged.

An aqueous dispersion containing 230 g/l of the polymeric resin was obtained.

The aqueous dispersion was coagulated by mechanical stirring and was filtered; the solid product was repeatedly washed with distilled water and was dried in a circulating air oven at 200°C. The product had a specific melt viscosity of $1.063 \times 10^8$ mPa·s (1.063 x 10 poise) and a melt flow index (M.F.I.) of 0.5 g/10 minutes and

exhibited a second melting peak at 264.9°C. The resulting powder was extruded in a Branbender single-screw extruder: regular and perfectly white pelletes were obtained. The product did not require any further stabilizing and whitening treatment. The thermovolatility index was 60 and the whiteness was 71.

EXAMPLE 4

4.7 ml of a carboxylic acid having the structure of a perfluoropolyether belonging to class 1) and having a mean molecular weight of 632 were neutralized with 5 ml of 10% $NH_3$. 10 ml of $H_2O$ and 3 ml of perfluoropolyether oil of example 1 having perfluoroalkyl end groups were added.

By heating to a temperature of 70°C, a limpid and stable single-phase system was obtained, which proved to be a microemulsion of the perfluoropolyether.

The microemulsion so prepared was added, at a temperature of 75°C, to 3 l of thoroughly deaerated water, contained in an AISI 316 steel autoclave of 4.2 l volume, equipped with a mechanical stirrer, in which vacuum had previously been generated.

The temperature in the autoclave was brought to 95°C under mechanical stirring (600 rpm). The autoclave was pressurized to 1.9 MPa (20 kg/cm$^2$) gauge with a gas mixture containing 11.57% by moles of perfluoromethylvinylether $C_3F_6O$ and 88.43% of $C_2F_4$.

1 24 ml of a solution containing 0.362 g/l of $K_2S_2O_8$ and 0.362 g/l of $(NH_4)_2S_2O_8$ were then introduced into the autoclave.

As soon as the pressure in the autoclave began to decrease it was restored by feeding, through a compressor, a $C_3F_6O/C_2F_4$ mixture containing 2.71% by moles of $C_3F_6O$. After 15 minutes, the above-specified persulphate solution was fed at a rate of 88 ml/hour.

After stirring for 60 minutes, the reaction was discontinued and the gas mixture was discharged.

An aqueous dispersion containing 214 g/l of polymer was obtained.

The average $C_3F_6O$ content in the polymer, determined by mass balance, was 3.1% by moles.

EXAMPLE 5

It was operated as is described in example 1, using 10 ml of the microemulsion described therein, containing 1.3 ml of neutral perfluoropolyether.

The autoclave was brought to 30°C, whereafter 100 mg of $(NH_4)_2S_2O_8$ were introduced and the pressure was brought to 1.9 MPa (20 atm.) by means of a mixture of TFE and perfluoromethylvinylether (PFMVE) (1.6% by moles of PFMVE comonomer).

An aqueous solution containing 30 mg of Mohr salt was then introduced into the autoclave. As soon as the pressure in the autoclave began to decrease, it was restored by means of $C_2F_4$. The reaction temperature was gradually raised during the reaction up to 60°C. After 75 minutes, stirring was stopped and the gas mixture was discharged, thereby obtaining an aqueous dispersion containing 200 g/l of polymer. The average diameter of the dispersion particles, determined by electron microscopy, was 0.070 µm.

The number of particles per liter of water ($N_{p/1}$) was equal to 5.2 x $10^{17}$.

The comonomer content (PFMVE) of the coagulated polymer, determined by mass balance and FTIR sprectroscopy, was 0.62% by weight.

## Claims

1. A process for polymerizing or copolymerizing fluorinated monomers in an aqueous dispersion by using radical starters and fluorinated surfactants, wherein an aqueous microemulsion of perfluoropolyethers having neutral end groups which are liquid under the polymerization conditions and have an average molecular weight of not lower than 500 is added to the polymerization mixture at the beginning of the polymerization, the amount of perfluoropolyether being not lower than 0.05 ml per liter of aqueous polymerization solution.

2. The process according to claim 1 wherein the perfluoropolyether is selected from the following classes:

1) $$R_fO(\underset{\underset{CF_3}{|}}{CF}-CF_2O)_n(\underset{\underset{CF_3}{|}}{CF}O)_m(CF_2O)_pR'_f$$

with a random distribution of the perfluorooxyalkylene units, where $R_f$ and $R'_f$, the same or different from each

other, are $-CF_3$, $-C_2F_5$ or $-C_3F_7$;
2) $R_fO(CF_2CF_2O)_n(CF_2O)_mR'_f$
with a random distribution of the perfluorooxyalkylene units, where $R_f$ and $R'_f$, the same or different from each other, are $-CF_3$ or $-C_2F_5$;

3) 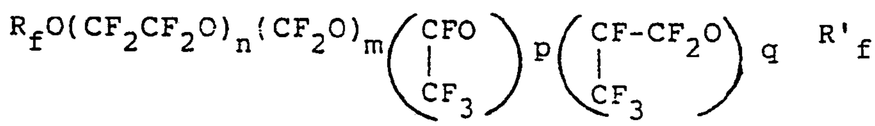

with a random distribution of perfluorooxyalkylene units, where $R_f$ and $R'_f$, the same or different from each other, are $-CF_3$, $-C_2F_5$ or $-C_3F_7$;

4) 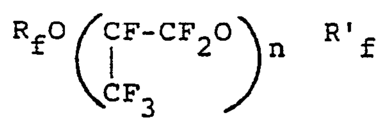

where $R_f$ and $R'_f$, the same or different from each other, are $-C_2F_5$ or $-C_3F_7$;
5) $R_fO(CF_2CF_2O)_nR'_f$
where $R_f$ and $R'_f$, the same or different from each other, are $-CF_3$ or $-C_2F_5$;
6) $R_fO(CF_2CF_2CF_2O)_nR'_f$
where $R_f$ and $R'_f$, the same or different from each other, are $-CF_3$, $-C_2F_5$ or $-C_3F_7$;

7) 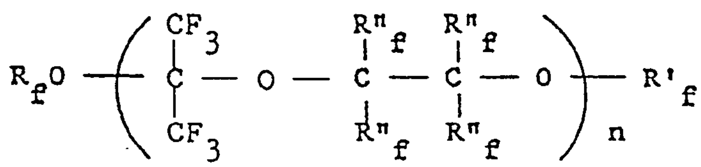 and

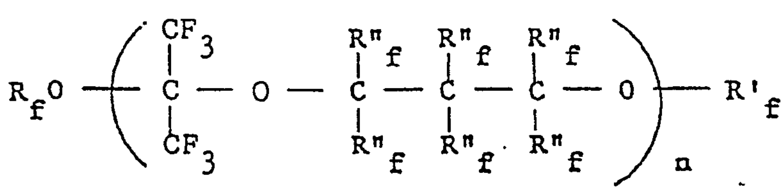

wherein $R_f$ and $R'_f$ are perfluoroalkyl and $R''_f$ is F or perfluoroalkyl;
n, m,p and q in the above formulae (1) to (7) having values such that the corresponding compounds show the characteristics specified in claim 1.

3. The process according to any one of claims 1 and 2, wherein the surfactant belongs to the class of the perfluoropolyethers having an acid end group.

4. A process for preparing a copolymer of $C_2F_4$ and $C_3F_6$ containing from 7 to 27 percent by weight of $C_3F_6$ according to any one of claims 1 to 3.

5. A process for preparing a copolymer of $C_2F_4$ and a perfluoroalkyl perfluorovinyl ether containing less than 0.5 percent by weight of perfluoroalkyl perfluorovinyl ether according to any one of claims 1 to 3.

6. A process for preparing a copolymer of $C_2F_4$ and a perfluoroalkyl perfluorovinyl ether containing from 0.5 to 10 percent by weight of perfluoroalkyl perfluorovinyl ether according to any one of claims 1 to 3.

**Patentansprüche**

1. Verfahren zur Polymerisation oder Copolymerisation von fluorierten Monomeren in einer wäßrigen Dispersion unter Verwendung von Radikalstartern und fluorierten oberflächenaktiven Mitteln, worin eine wäßrige Mikroemulsion von Perfluorpolyethern mit neutralen Endgruppen, die unter den Polymerisationsbedingungen flüssig sind und ein durchschnittliches Molekulargewicht nicht geringer als 500 aufweisen, zu Beginn der Polymerisation zur Polymerisationsmischung gegeben werden, wobei die Menge an Perfluorpolyethern nicht weniger als 0,05 ml pro Liter der wäßrigen Polymerisationslösung beträgt.

2. Verfahren nach Anspruch 1, worin der Perfluorpolyether aus den folgenden Klassen ausgewählt ist:

1) 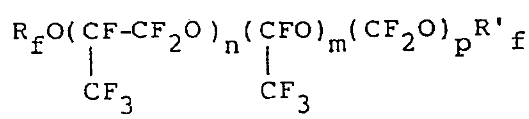

mit einer statistischen Verteilung der Perfluoroxyalkyleneinheiten, worin $R_f$ und $R'_f$ gleich oder verschieden voneinander sind und $-CF_3$, $-C_2F_5$ oder $-C_3F_7$ darstellen;

2) $R_fO(CF_2CF_2O)_n(CF_2O)_mR'f$

mit einer statistischen Verteilung der Perfluoroxyalkyleneinheiten, worin $R_f$ und $R'_f$ gleich oder verschieden voneinander sind und $-CF_3$ oder $-C_2F_5$ darstellen;

3) 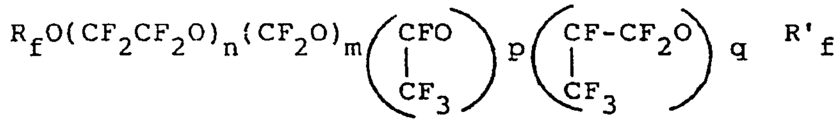

mit einer statistischen Verteilung der Perfluoroxyalkyleneinheiten, worin $R_f$ und $R'_f$ gleich oder verschieden voneinander sind und $-CF_3$, $-C_2F_5$ oder $-C_3F_7$ darstellen;

4) 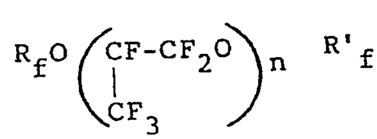

worin $R_f$ und $R'_f$ gleich oder verschieden voneinander sind und $-C_2F_5$ oder $-C_3F_7$ darstellen;

5) $R_fO(CF_2CF_2O)_nR'_f$

worin $R_f$ und $R'_f$ gleich oder verschieden voneinander sind und $-CF_3$ oder $-C_2F_5$ darstellen;

6) $R_fO(CF_2CF_2CF_2O)_nR'_f$

worin $R_f$ und $R'_f$ gleich oder verschieden voneinander sind und $-CF_3$, $-C_2F_5$ oder $-C_3F_7$ darstellen;

7) 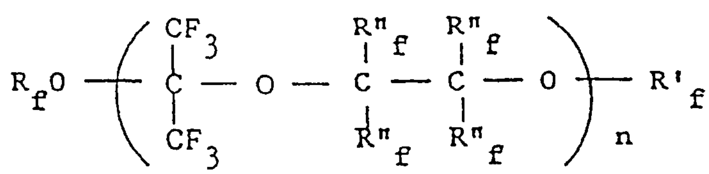 und

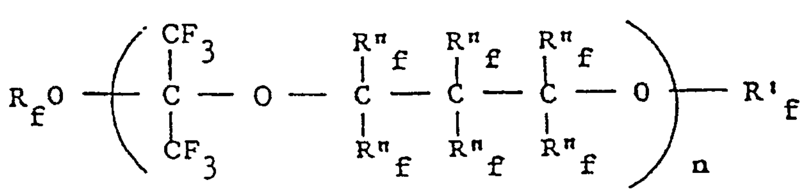

worin $R_f$ und $R'_f$ Perfluoralkyl bedeuten und $R''_f$ F oder Perfluoralkyl darstellt;

n, m, p und q in den obigen Formeln (1) bis (7) solche Werte aufweisen, daß die entsprechenden Verbindungen die in Anspruch 1 angegebenen Eigenschaften zeigen.

3. Verfahren nach irgendeinem der Ansprüche 1 und 2, worin das oberflächenaktive Mittel zur Klasse der Perfluorpolyether mit einer sauren Endgruppe gehört.

4. Verfahren zur Herstellung eines Copolymers von $C_2F_4$ und $C_3F_6$, welches 7 bis 27 Gewichtsprozent $C_3F_6$ enthält, nach irgendeinem der Ansprüche 1 bis 3.

5. Verfahren zur Herstellung eines Copolymers von $C_2F_4$ und einem Perfluoralkylperfluorvinylether, wel-

ches weniger als 0,5 Gewichtsprozent Perfluoralkylperfluorvinylether enthält, nach irgendeinem der Ansprüche 1 bis 3.

6. Verfahren zur Herstellung eines Copolymers von $C_2F_4$ und einem Perfluoralkylperfluorvinylether, welches 0,5 bis 10 Gewichtsprozent Perfluoralkylperfluorvinylether enthält, nach irgendeinem der Ansprüche 1 bis 3.

**Revendications**

1. Un procédé de polymérisation ou de copolymérisation de monomères fluorés en dispersion aqueuse à l'aide d'initiateurs radicalaires et de tensio-actifs fluorés dans lequel une micro-émulsion aqueuse de perfluoropolyéthers ayant des groupes terminaux neutres qui sont liquides dans les conditions de polymérisation et ont un poids moléculaire moyen non inférieur à 500, est ajoutée au mélange de polymérisation au début de la polymérisation, la quantité de perfluoropolyéther n'étant pas inférieure à 0,05 ml par litre de solution aqueuse de polymérisation.

2. Le procédé selon la revendication 1, dans lequel le perfluoropolyéther est sélectionné dans les classes suivantes :

1) 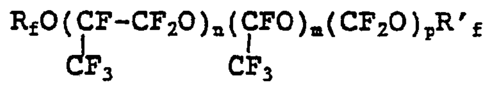

avec une distribution statistique aléatoire des unités perfluoro-oxyalkylène, dans laquelle $R_f$ et $R'_f$, identiques ou différents l'un de l'autre, sont $-CF_3$, $-C_2F_5$ ou $-C_3F_7$ ;

2) $R_fO(CF_2CF_2O)_n(CF_2O)_mR'_f$
avec une distribution aléatoire des unités perfluorooxyalkylène, dans laquelle $R_f$ et $R'_f$, identiques ou différents l'un de l'autre, sont $-CF_3$ ou $-C_2F_5$ ;

3) 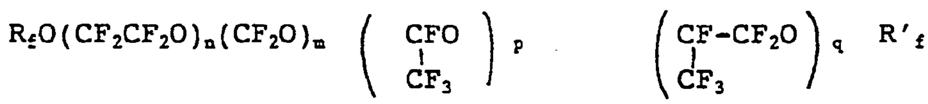

avec une distribution aléatoire des unités perfluorooxyalkylène, dans laquelle $R_f$ et $R'_f$, identiques ou différents l'un de l'autre, sont $-CF_3$, $-C_2F_5$ ou $-C_3F_7$ ;

4) 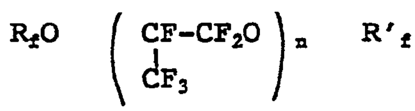

dans laquelle $R_f$ et $R'_f$, identiques ou différents l'un de l'autre, sont $-C_2F_5$ ou $-C_3F_7$ ;

5) $R_fO(CF_2CF_2O)_nR'_f$
dans laquelle $R_f$ et $R'_f$, identiques ou différents l'un de l'autre, sont $-CF_3$ ou $-C_2F_5$;

6) $R_fO(CF_2-CF_2CF_2O)_nR'_f$
dans laquelle $R_f$ et $R'_f$, identiques ou différents l'un de l'autre, sont $-CF_3$, $-C_2F_5$ ou $C_3F_7$;

7) 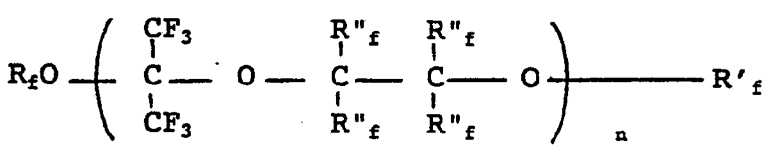 et

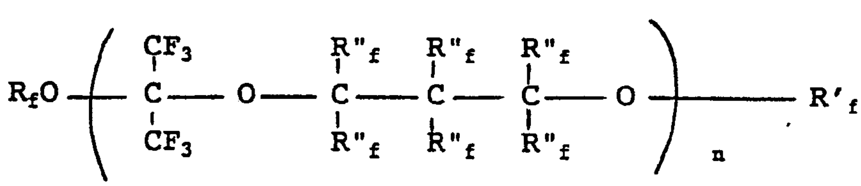

dans lesquelles $R_f$ et $R'_f$ sont des radicaux perfluoroalkyls et $R''_f$ est F ou un radical perfluoroalkyl; n, m, p et q dans les formules ci-dessus (1) à (7) ayant des valeurs telles que les composés correspondants ont les caractéristiques spécifiées dans la revendication 1.

3. Procédé selon l'une quelconque des revendications 1 ou 2, dans lequel le tensio-actif appartient à la classe des perfluoropolyéthers ayant un groupe terminal acide.

4. Un procédé de préparation d'un copolymère de $C_2F_4$ et de $C_3F_6$ contenant de 7 à 27 % en poids de $C_3F_6$ selon l'une quelconque des revendications 1 à 3.

5. Un procédé de préparation d'un copolymère de $C_2F_4$ et de perfluoroalkyl perfluorovinyléther contenant moins de 0,5 % en poids de perfluoroalkyl perfluorovinyléther selon l'une quelconque des revendications 1 à 3.

6. Un procédé de préparation d'un copolymère de $C_2F_4$ et d'un perfluoroalkyl perfluorovinyléther contenant de 0,5 à 10 % en poids de perfluoroalkyl perfluorovinyléther selon l'une quelconque des revendications 1 à 3.